Europäisches Patentamt

European Patent Office

Office européen des brevets

(19)

(11) Numéro de publication: **0 202 271**
**B1**

(12) **FASCICULE DE BREVET EUROPEEN**

(45) Date de publication du fascicule du brevet:
**24.05.89**

(51) Int. Cl.⁴: **B 63 H 9/06,** B 64 C 3/30,
B 64 D 17/00

(21) Numéro de dépôt: **85905633.5**

(22) Date de dépôt: **08.11.85**

(86) Numéro de dépôt international:
**PCT/FR 85/00318**

(87) Numéro de publication internationale:
**WO 86/02902 (22.05.86** Gazette 86/11)

(54) AILE PROPULSIVE A ARMATURE GONFLABLE.

(30) Priorité: **16.11.84 FR 8417701**

(43) Date de publication de la demande.
**26.11.86 Bulletin 86/48**

(45) Mention de la délivrance du brevet:
**24.05.89 Bulletin 89/21**

(84) Etats contractants désignés:
**DE FR GB IT NL**

(56) Documents cités:
**DE-A- 2 933 050**
**DE-C- 445 639**
**GB-A- 2 098 946**
**US-A- 4 296 704**

(73) Titulaire: **LEGAIGNOUX, Dominique, 26, chemin de
Kernoter, F-29000 Quimper (FR)**
Titulaire: **LEGAIGNOUX, Bruno, 26, chemin de Kernoter,
F-29000 Quimper (FR)**

(72) Inventeur: **LEGAIGNOUX, Dominique, 26, chemin de
Kernoter, F-29000 Quimper (FR)**
Inventeur: **LEGAIGNOUX, Bruno, 26, chemin de
Kernoter, F-29000 Quimper (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

## Description

La présente invention concerne une aile propulsive dont le profil présente une courbure aérodynamiquement efficace, reliée uniquement par des filins à un corps, généralement dans le but de le tracter ou de le sustenter et comprenant une armature gonflable ainsi qu'une enveloppe en matériau mince et souple.

Les ailes propulsives connues, du fait de leur forme généralement plane, imposent de gros efforts à la structure qui les maintient déployées. Schématiquement cela nécessite l'utilisation soit d'armatures rigides qui sont lourdes et encombrantes à transporter et à ranger, soit d'armatures gonflables étanches ou gonflables par le vent qui, du fait de leur résistance insuffisante, sont toujours soutenues par un grand nombre de filins aboutissant au corps à tracter ou à sustenter. C'est le cas de l'aile décrite par le brevet DE-A-2933050. Les filins et les armatures gonflables par le vent, outre qu'ils nuisent fortement aux qualités aérodynamiques, rendent l'utilisation de ces ailes délicate: les filins ont par exemple tendance à s'emmêler et ces armatures à se dérober.

L'aile propulsive selon l'invention tel que definie dans la revendication 1, de par sa forme épurée, remédie à ces inconvénients. En effet, cette aile qui évoque un fuseau sphérique, permet grâce aux efforts minimes qu'elle impose à la structure l'utilisation d'une armature gonflable. Cette armature contenant de l'air sous pression est conçue et calculée pour s'intégrer parfaitement à la forme de l'aile sand gêner l'écoulement de l'air. Elle comporte une latte d'attaque de forme sensiblement demicirculaire et plusieurs lattes transversales à la première. Elle est enveloppée dans un tissu léger et résistant agencé de façon à lui donner un profil d'aile d'avion à rendement maximum. Cette aile est donc d'une grande légèreté et d'un encombrement très réduit, une fois dégonflée et pliée. Chaque pointe de l'aile reçoit un long filin fixé au corps à tracter ou à sustenter, permettant ainsi de diriger l'aile. Afin de l'adapter à différentes forces de vent, il est possible de réduire la surface de la voile en enlevant la partie arrière du tissu par un moyen approprié comme par exemple une fermeture à glissière.

Enfin, de par la flottabilité importante apportée par l'armature et la simplicité du système de commande, l'envol étant extrêmement simple à réaliser même sur l'eau, cette aile pourra être contrôlée par un utilisateur monté sur un ou deux patins, disposant d'une poulie attachée à son harnais et dans laquelle passe un seul filin relié aux deux pointes du fuseau.

L'aile propulsive sera détaillée en regard des dessins annexés, donnés à titre d'exemples et sur lesquels:

La fig. 1 représente, en perspective, l'aile selon l'invention;

la fig. 2 représente, en coupe, le profil de l'aile;

la fig. 3 représente, de face, l'aile selon l'invention;

la fig. 4 représente, en perspective, l'armature gonflable;

la fig. 5 représente, en coupe, une variante de profil avec système de réduction de voilure;

la fig. 6 représente, de côté, l'aile selon l'invention;

les fig. 7, 8 et 9 représentent les trois étapes de la méthode graphique de tracé des laizes;

la fig. 10 représente l'utilisation la plus sportive en milieu nautique.

L'aile est toujours représentée gonflée par le vent. Sa taille peut varier énormément selon l'utilisation, de moins d'un demi-mètre carré comme jouet d'enfant à plusieurs dizaines voire centaines de mètres carrés pour les charges lourdes. La forme du profil peut varier également.

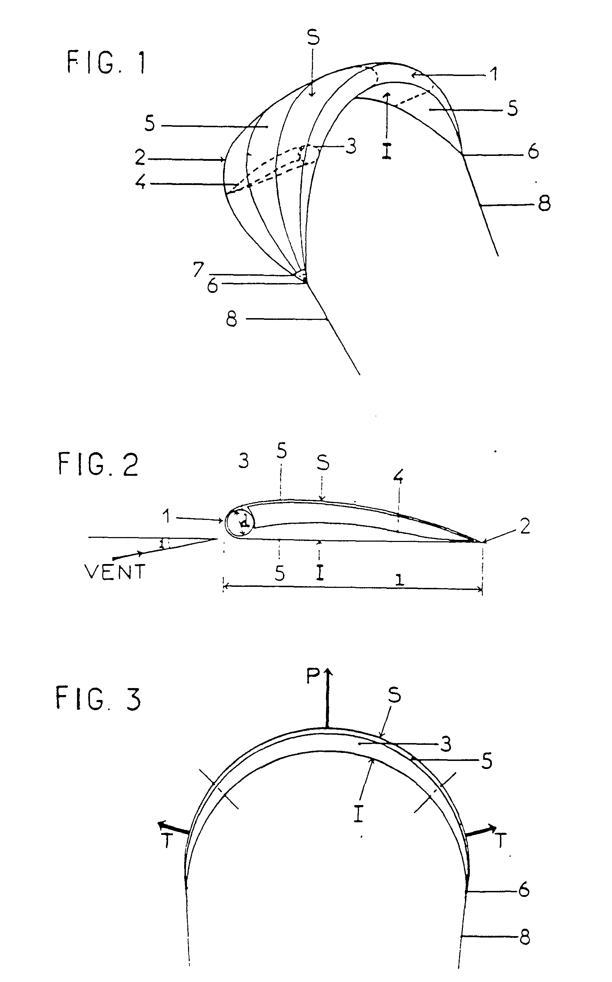

La fig. 1 donne une vue globale de l'aile. Celleci, en forme de fuseau sphérique comportant un bord d'attaque (1) et un bord de fuite (2), est matérialisée par une armature gonflable (3 et 4) recouverte d'une enveloppe souple (5) en extrados (S) comme en intrados (I). Chacune de ses pointes (6) reçoit par l'intermédiaire d'une plaquette (7) un filin de commande (8) relié à la charge.

Cette aile fonctionne aérodynamiquement parlant comme une aile d'avion ainsi que le montre la fig. 2, c'est-à-dire qu'elle négocie le vent avec un faible angle d'incidence (i), créant une pression sur le côté intrados (I) et une dépression sur le côté extrados (S), le vent se déplaçant de l'attaque (1) vers la fuite (2). La différence essentielle avec une aile d'avion est que celle-ci est plane vue de face et l'aile selon l'invention sensiblement demicirculaire, ce qu'illustre la fig. 3. L'intérêt principal de cette forme provient du fait qu'elle impose un minimum d'efforts à l'armature. De plus, cette forme se suffit à elle-même, elle se passe de tout appendice de structure. En effet sa surface se décompose schématiquement en trois parties: une partie centrale qui développe la force propulsive (P), l'aile à proprement parler, et deux parties situées aux extrémités. Ces dernières représentent environ un tiers de la surface totale et ont trois fonctions:

Elles servent de gouvernes, c'est-à-dire qu'elles donnent la stabilité longitudinale de l'aile.

Elles produisent une force (T) qui écarte les pointes et maintient ainsi la structure déployée.

Elles servent de plaques d'extrémité à la partie propulsive (P) de l'aile, c'est-à-dire qu'elles limitent au maximum les pertes de pression en intrados (I), et donc le comblement de la dépression en extrados (S) (problème de l'aile classique). C'est pourquoi on peut les qualifier de gouvernes dynamiques.

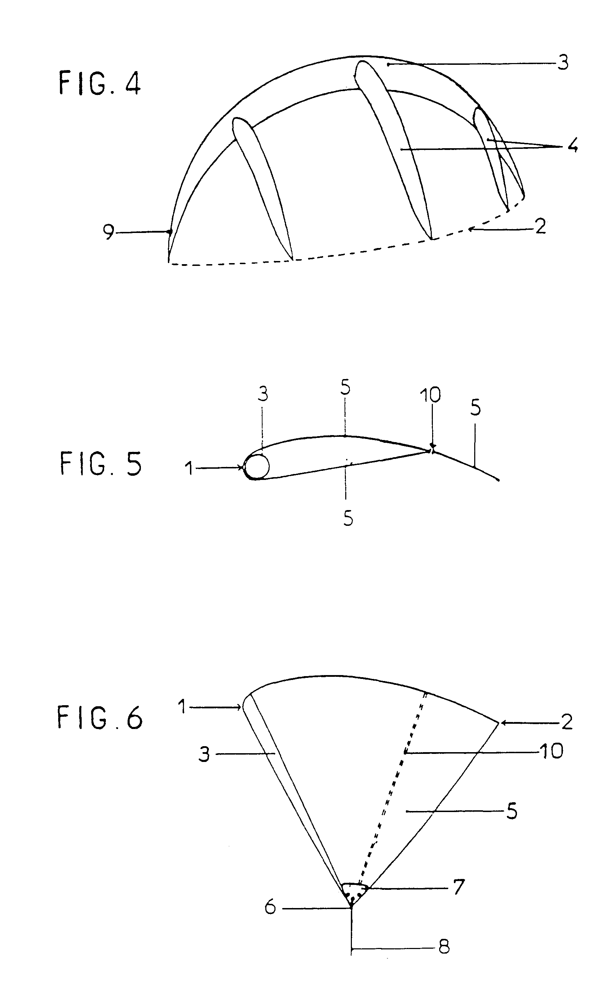

Mais aucune voile ne peut se présenter avec un angle d'incidence faible par rapport au vent si elle n'est maintenue dans sa forme souhaitée par une armature appropriée. L'armature de l'aile propulsive représentée à la fig. 4 est gonflable à l'aide d'un gonfleur de canot pneumatique par exemple, par un ou plusieurs orifices (9) munis de bouchons et accessoirement de valves antiretour. La pression nécessaire est relativement faible. On peut remplacer l'air par un gaz plus léger pour faciliter l'envol de l'aile dans des vents faibles par exemple. Les lattes sont de section ronde. Leur forme est calculée pour s'intégrer au profil. Elles peuvent être fabriquées selon deux optiques: soit une gaine plus une chambre à air, soit une chambre à air seule, inextensible. Le matériau doit être souple et résister de façon satisfaisante à la tension et aux pliages répétés. Enfin, les lattes peuvent être toutes reliées entre elles, ne nécessitant qu'un orifice de gonflage, ou séparées et en disposant chacune d'un.

La latte d'attaque (3) a une longueur égale à celle du bord d'attaque. Son diamètre (d) (fig. 2) varie suivant la position le long du bord d'attaque (1) en fonction de la longueur du profil (l). Cette latte s'amenuise donc vers les extrémités pour finir en pointe, ce qui lui donne, vue de face, une forme en croissant (fig. 3). Son rôle est d'empêcher le bord d'attaque (1) de se dérober et à toute l'aile de se déformer, ce qui perturberait fortement le contrôle de vol.

Les lattes transversales (4), ont une longueur égale à la longueur du profil à l'endroit où elles sont placées moins l'épaisseur de la latte d'attaque sur laquelle elles viennent buter. Leur nombre varie suivant la taille de l'aile, l'épaisseur et la souplesse du tissu. Dans un cas de réalisation où la surface était de 4 m² et le tissu de 100 gr/m², ces lattes étaient au nombre de trois espacées régulièrement. Leur rôle est d'empêcher le tissu de plisser. Elles travaillent donc surtout en compression.

Cette armature reçoit, comme représentée sur la fig. 2, une enveloppe (5) confectionnée dans un matériau souple et léger, tissu synthétique ou feuille plastique, peu déformable, peu imprégnable à l'eau, convenablement résistant à la déchirure et à l'usure. Cette enveloppe entoure totalement l'armature, faisant disparaître celle-ci. Ces deux dernières sont fixées ensemble par tous leurs points de contact. Une couche de tissu recouvre le dessus de l'armature et forme l'extrados (S), une autre recouvre le dessous et forme l'intrados (I). Elles se rejoignent à l'arrière et sont fixées ensemble.

Dans une version différente illustrée aux fig. 5 et 6, on peut disposer avec une même aile de deux surfaces de voilure suivant la force du vent. Pour cela, il faut fixer une fermeture à glissière (10) dans le sens de la longueur de l'aile, généralement au tiers arrière, afin d'obtenir au besoin une aile plus étroite. A titre d'exemple une aile de 6 m² peut être ramenée à 4 m². Cette solution s'avère très pratique à condition de fixer l'enveloppe intrados au niveau de la fermeture à glissière, ou de la supprimer, ce qui réduit légèrement les performances de l'aile. En outre il faut prévoir dès l'ébauche du profil que cette réduction de voilure ne change pas l'équilibre de l'aile. Enfin, pour obtenir de bonnes performances en vol, l'aile a un rapport longueur de l'aile/longueur maximale du profil supérieur à 2, la longueur de l'aile étant la longueur de l'enveloppe (5) entre les deux pointes (6).

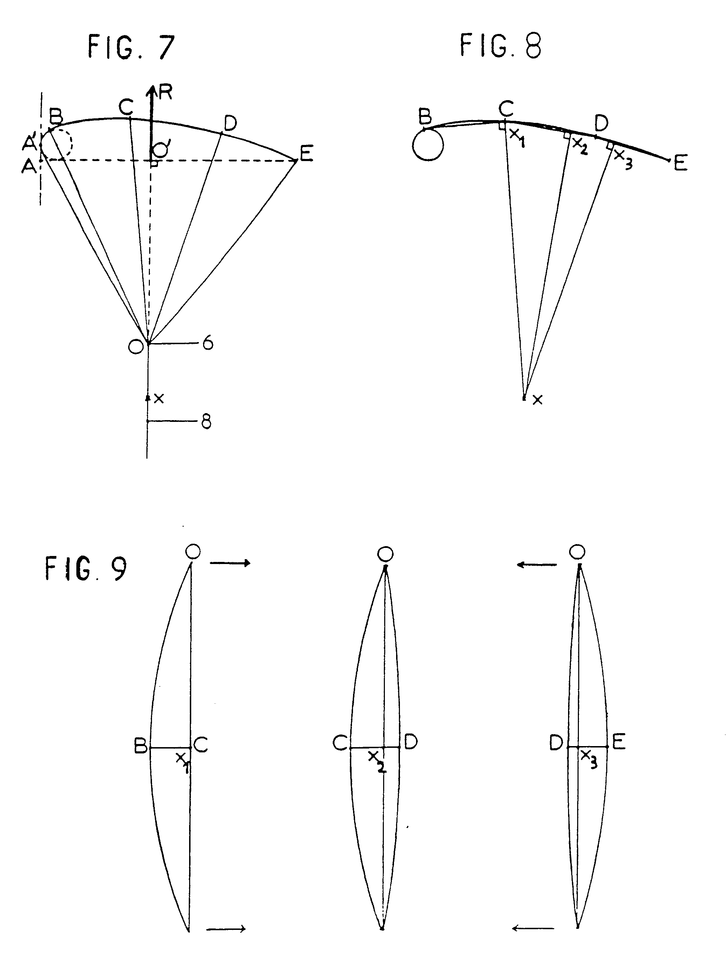

L'aile, accrochée par deux points, est en situation d'équilibre stable en vol lorsque son angle d'incidence par rapport au vent nommé (i) rend laminaire l'écoulement de l'air autour du profil. L'angle (i) doit être très faible pour permettre un bon cap ou angle de remontée par rapport au vent. Pour parvenir à ce résultat, il faut que les pointes (O) (fig. 7) soient dans le prolongement de la force (R), résultant des forces de poussée et de traînée, (R) étant située à 42% de la longueur du profil. Ce pourcentage peut varier suivant la forme du profil dans de faibles proportions. La surface de l'aile étant courbe dans les deux sens, donc non développable, et le pourcentage devant être respecté impérativement, il devenait impossible de fabriquer de manière archaïque une aile de forme parfaite. C'est pourquoi a été mise au point une méthode par projection graphique représentée aux fig. 7, 8 et 9, permettant de connaître la forme exacte des laizes ou pièces de tissu qui, assemblées suivant une disposition radiale, forment l'enveloppe. Par cette méthode la forme du profil est respectée en tous points de l'aile.

Sur la fig. 7, les traits pleins représentent l'aile vue de côté. Le nombre de laizes et la forme du profil sont choisis de façon arbitraire. Soient (O) une des pointes de l'aile, (AA') l'axe délimitant l'avant du profil et parallèle à (OO'), (AE) la longueur du profil. La surface (OA'B) représente la latte d'attaque, (OBC), (OCD) et (ODE) étant les laizes. Le point (O'), projection orthogonale de (O) sur la droite (AE) est tel que AO' = 42% de (AE). La projection se fait à partir d'un point (X) fictif situé dans l'alignement de la droite (O'O) tel que O'X≥OO'.

La fig. 8, calqée sur la fig. 7, est une coupe du profil choisi (uniquement l'extrados pour la démonstration actuelle). On trace trois droites (BC), (CD) et (DE) qui représentent le profil obtenu après assemblage des laizes (plus les laizes sont nombreuses, plus le profil obtenu se rapproche du profil souhaité). On projette du point (X) une perpendiculaire sur chacune de ces droites. On obtient les points l'intersection (x1), (x2) et (x3).

La fig. 9, issue de la fig. 8, représentée ici à l'échelle ½, donne la forme exacte des laizes. On reproduit les trois droites (BC), (CD) et (DE) horizontalement avec les points (x1), (x2) et (x3). On trace des verticales à ces trois points qui s'arrêtent aux extrémités (O) de l'aile. Pour chaque laize, on trace deux arcs de cercle partant des extrémités (O) et passant par les points (B), (C), (D) et (E). Dans cet exemple, (C) étant confondu avec (x1), on obtient une droite à l'arrière de la première laize. Les laizes sont assemblées suivant les flèches, bord contre bord, de telle façon que les extrémités (O) se rejoignent en un même point, par collage, couture, ou autre moyen approprié. Elles sont ensuite fixées à l'armature. Cette méthode de fabrication par laizes assemblées exige peu de moyens matériels pour une réalisation artisanale. Cependant d'autres techniques de fabrication sont envisageables industriellement, comme par exemple le thermoformage de feuilles souples en matériaux divers sur un moule ayant la forme de l'aile.

D'autre part, afin de permettre un réglage très précis de l'angle d'incidence (i), chaque pointe peut être munie d'une plaquette (7) percée de plusieurs trous, sur laquelle vient se fixer le filin (8). Si celui-ci est attaché vers l'arrière de la plaquette, l'angle (i) devient fort, et s'il est attaché vers l'avant, (i) devient fin. L'angle (i) ne varie quasiment pas suivant la force du vent, excepté par vent faible, lorsque le poids de l'aile influe sur son comportement.

Le filin (8) doit être léger, résistant et s'allonger le moins possible. Sa longueur ne répond pas à des impératifs particuliers. Toutefois, il faut savoir que le vent est plus stable et fort en altitude mais que le poids du filin et sa prise au vent peuvent interférer sur le contrôle de l'aile. C'est pourquoi une longueur de quelques dizaines de mètres pour des ailes de moins de 10 à 20 m$^2$ paraît convenable pour d'utilisation sous forme de cerf-volant.

Lorsque la charge à tracter est un engin, l'aile est reliée à celui-ci par un seul filin passant dans une ou plusieurs poulies.

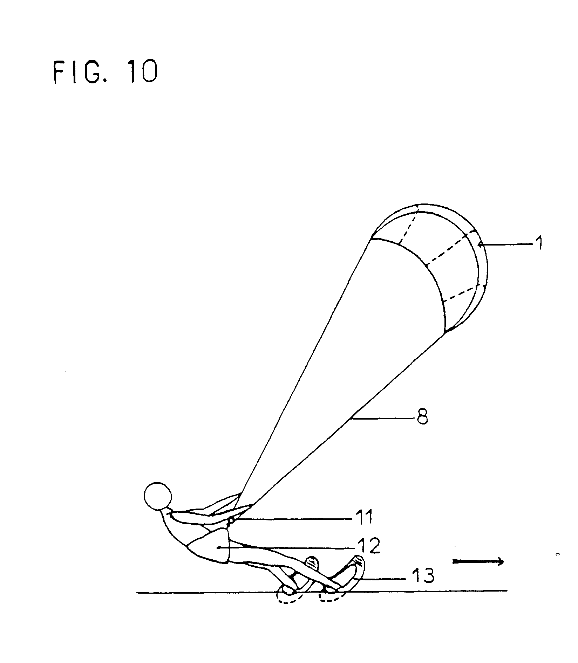

Lorsque la charge à tracter est l'utilisateur monté sur un engin de faibles dimensions, le filin (8) est utilisé comme on peut le voir à la fig. 10 pour régler l'aile dans la direction souhaitée. Chacun de ses bouts rejoint une des pointes (6) de l'aile. Il passe dans une poulie à émerillon (11) qui tourne sur elle-même librement, fixée au harnais (12) que porte l'utilisateur. La force propulsive fournie par l'aile se répercute par le filin (8) sur la poulie (11) puis l'utilisateur, mais celui-ci n'exerce que très peu d'efforts pour diriger l'aile car les tensions sur le filin sont toujours égales de chaque côté de la poulie. L'émerillon permet à la poulie (11) de tourner sur elle-même afin d'éliminer les tours dans le filin provoqués par l'aile lors des manœuvres d'envoi notamment.

Avec cette aile insubmersible et son système de commande, l'envol sur l'eau ou à terre est extrêmement aisé et ne demande aucune aide extérieure. Dans son utilisation la plus sportive en milieu nautique, l'utilisateur est équipé d'un ou deux patins spéciaux (13).

Dans une utilisation en vol, une personne suspendue à l'aile par l'intermédiaire d'un harnais approprié, utilise le même système de commande décrit précédemment (fig. 10).

Cette aile peut servir à la traction ou à la sustentation d'une personne, d'une charge, d'un engin sur l'eau, sur le sol (neige, glace, herbe, sable, etc.) ou en l'air. Parmi ses nombreuses applications possibles, les plus évidentes concernent les sports de glisse, le yachting, le vol à voile.

**Revendications**

1. Aile propulsive dont le profil présente une courbure aérodynamiquement efficace, reliée par des filins (8) à un corps généralement à tracter ou à sustenter, comprenant une enveloppe (5) en matériau mince et souple ainsi qu'une armature gonflable composés d'une latte d'attaque (3) et de lattes transversales (4), la latte d'attaque (3) ayant une épaisseur qui varie suivant la position le long du bord d'attaque (1) en fonction de la longueur du profil (1), chacune des deux extrémités du bord d'attaque (1) et du bord de fuite (2) se rejoignant et formant une pointe (6), caractérisée en ce que l'aile se présente en forme de fuseau sphérique, l'aile vue de face étant sensiblement demi-circulaire, chaque pointe (6) recevant un des deux filins (8) aboutissant à l'aile, et en ce que la variation de l'épaisseur de la latte d'attaque (3) confère à cette latte, vue de face, une forme en croissant.

2. Aile propulsive selon la revendication 1, caractérisée en ce que les laizes formant l'enveloppe (5) sont assemblées suivant une disposition radiale à partir de chaque pointe (6), chaque laize allant d'une pointe (6) à l'autre.

3. Aile propulsive selon la revendication 1, caractérisée en ce que la partie arrière de l'enveloppe (5) est amovible par fermeture à glissière (10).

4. Aile propulsive selon la revendication 1, caractérisée en ce que le filin (8) dont chaque extrémité rejoint une des pointes (6), passe dans une poulie à émerillon (11) fixée au harnais (12) que porte l'utilisateur.

**Patentansprüche**

1. Antriebsflügel, dessen Profil eine aerodynamisch wirkende Krümmung aufweist, welche über zwei Schnüre (8) mit einem Körper verbunden ist, der i. A. auf einer Wasseroberfläche zu ziehen bzw. zu tragen ist, bestehend aus einer Hülle (5) aus dünnem und flexiblem Material sowie aus einem aufblasbaren Stützrahmen, bestehend aus einer Stirnstrebe (3) und Querstreben (4), wobei sich die Stärke der Stirnstrebe (3) entsprechend der Stellung entlang des Leistenrandes (1) je nach Länge des Profils (L) ändert und jedes der beiden Enden der Stirnkante (1) und der Austrittskante (2) zusammenstoßen und dabei eine Spitze (6) bilden, dadurch gekennzeichnet, daß der Flügel die Form einer kugelförmigen Ballonbahn hat, wobei der Flügel von vorn betrachtet weitgehend halbkreisförmig ist, jede der beiden Spitzen mit einer der beiden der Schnüre (8) verbunden ist und die Änderung der Stärke der Stirnstrebe (3) dieser Strebe von vorn gesehen ein sichelförmiges Profil verleiht.

2. Antriebsflügel nach Patentanspruch 1, dadurch gekennzeichnet, daß die Bahnen, die die Hülle (5) bilden, von jeder Spitze (6) ausgehend radienförmig ausgelegt sind, wobei jede Bahn von einer Spitze zur anderen reicht.

3. Antriebsflügel nach Patentanspruch 1, dadurch gekennzeichnet, daß das Hinterteil der Hülse (5) durch Reißverschluß (10) abnehmbar ist.

4. Antriebsflügel nach Patentanspruch 1, dadurch gekennzeichnet, daß die Schnüre (8), von denen je ein Ende mit einer der beiden Spitzen (6) verbunden ist, über eine Drehrolle (11) mit dem Traggeschirr (12) für den Benutzer verbunden ist.

**Claims**

1. A propulsive wing whose profile has an aerodynamically efficient curvature, linked by ropes (8) to a body generally to be pulled or lifted, comprising an enveloppe (5) made from a thin and flexible material and an inflatable armature made up of a leading strut (3) having a thickness dimension that varies according to location along the wing leading edge (1) as a function of the length of the profile (L), with each of the two extremities of the leading edge (1) and of the trailing edge (2) joining to form a tip (6), wherein the wing is in the form of a spherical gore, the wing viewed from edge on being perceptibly semi-circular, each tip (6) taking one of the two ropes (8) ending in the wing, and wherein the variation of the leading strut thickness dimension confers on this strut, seen edge on, a crescent shape.

2. The propulsive wing according to claim 1, wherein the pieces of material forming the envelope (5) are assembled together in a radial arrangement from each tip (6), each piece of material going from one tip (6) to the other.

3. The propulsive wing according to claim 1, wherein the rear part of the envelope (5) is removable by the use of a zip fastener (10).

4. The propulsive wing according to claim 1, wherein the rope (8), each end of which is connected to one of the tips (6), passes through a swivel block (11) fixed to a harness (12) worn by the user.

FIG. 1

FIG. 2

VENT

FIG. 3

FIG. 4

FIG. 5

FIG. 6

FIG. 7

FIG. 8

FIG. 9

FIG. 10